# EUROPÄISCHE PATENTSCHRIFT

(11) **EP 4 085 747 B1**
(45) Veröffentlichungstag und Bekanntmachung des Hinweises auf die Patenterteilung: **23.08.2023**
(21) Anmeldenummer: 22169966.3
(22) Anmeldetag: 26.04.2022
(51) Int. Cl.: A01D 90/12

(54) **ERNTEMASCHINE MIT EINER EINEN MOMENTANEN BETRIEBSZUSTAND BERÜCKSICHTIGENDEN, POSITIONSBEZOGENEN GEWICHTSERMITTLUNG UND VERFAHREN HIERFÜR**
HARVESTER WITH POSITION-RELATED WEIGHT DETERMINATION TAKING INTO ACCOUNT AN OPERATING STATE AND METHOD FOR THE SAME
RÉCOLTEUSE AVEC DÉTERMINATION DU POIDS EN FONCTION DE LA POSITION ET DU MODE DE FONCTIONNEMENT ACTUEL ET PROCÉDÉ ASSOCIÉ

(30) Priorität: 05.05.2021 DE 102021111615
(43) Veröffentlichungstag der Anmeldung: 09.11.2022
(73) Patentinhaber: B. Strautmann & Söhne GmbH u. Co. KG, 49196 Bad Laer (DE)
(72) Erfinder: Wegmann, geb. Malewski, Benjamin, 49497 Mettingen (DE); Rehbock, Daniel, 26871 Papenburg (DE); Dierkes, Markus, 48231 Warendorf (DE)
(74) Vertreter: Dr. Träger & Strautmann PAe PartG mbB

(56) Entgegenhaltungen:
- EP-A1- 3 729 949
- DE-A1- 10 241 215
- US-A1- 2016 037 720

## Beschreibung

Die Erfindung betrifft eine Erntemaschine nach dem Oberbegriff des Anspruchs 1 sowie ein Verfahren nach dem Oberbegriff des Anspruchs 9. Bei der Erntemaschine handelt es sich vorzugweise um eine Erntemaschine mit einem Laderaum, der zur Aufnahme von Halm- und Blattgut vorgesehen ist. Hierbei kann es sich beispielsweise um einen Ladewagen oder eine Ballenpresse handeln. Nicht ausgeschlossen sind weiterhin Erntemaschinen zur Ernte von anderen landwirtschaftlichen Produkten, beispielsweise Kartoffel- oder Rübenvollernter.

Die Erntemaschine umfasst:
- eine Erntegutaufnahmevorrichtung,
- einen Laderaum als Speicher für das aufgenommene Erntegut,
- ein Wiegesystem,
- ein positionsbestimmendes System, beispielsweise ein GPS-System oder eine Schnittstelle zu einem positionsbestimmenden System eines die Erntemaschine ziehenden Zugfahrzeuges,
- ein Sensorsystem zur Ermittlung wenigstens eines Fahrzeug-Betriebszustandes,
- einen Datenprozessor, der zur Durchführung einer positionsbezogenen Ertragsbestimmung konfiguriert ist.

Aus EP 3 729 949 A1 ist ein Ladewagen zur Ernte von Halm- und Blattgut bekannt, der
- ein positionsbestimmendes System, beispielsweise ein GPS-System,
- ein Wiegesystem und
- ein erstes Sensorsystem zur Ermittlung eines Erntegut-Inhaltsstoffes aufweist.

Mittels eines zweiten Sensorsystems wird zudem ein Arbeitskennwert eines Erntebetriebszustandes ermittelt, so dass die positionsbezogene Ertragserfassung in Abhängigkeit des von der zweiten Sensorvorrichtung bestimmten Arbeitskennwertes aktivierbar ist. Dem in EP 3 729 949 A1 offenbarten System liegt der Gedanke zugrunde, die Datenerfassungssysteme zur positionsbezogenen Ertragserfassung erst dann einzuschalten bzw. deren Daten erst dann auszuwerten, wenn durch eine weitere - zweite - Sensorvorrichtung der Arbeits-Kennwert "der Ladewagen befindet sich im Ernteeinsatz" detektiert wird.

Auch bei aktiviertem Datenerfassungssystem kann der momentane Betriebszustand eines im Ernteeinsatz befindlichen Ladewagens einen Einfluss auf die vom Wiegesystem ermittelten Daten ausüben. Nachteilig an dem in EP 3 729 949 A1 offenbarten System ist, dass dieser momentane Betriebszustand bei der Auswertung insbesondere der Gewichtsdaten nicht weiter berücksichtigt wird. So können beispielsweise Kurvenfahrten oder Abbrems- bzw. Beschleunigungsmanöver Störgrößen bilden, die die vom Wiegesystem ermittelten Gewichtsdaten verfälschen.

Aus DE 102 41 215 A1 ist eine Rundballenpresse mit einer Wiegeeinrichtung, einem GPS-System und einer Auswerteinrichtung bekannt. Das GPS-Systems dient zur Positionsermittlung des Gesamtfahrzeuges. Bei geneigter Rundballenpresse kann der Rundballen an den Seitenwänden anliegen oder es können Presselemente auf dem Rundballen oder zwischen Rundballen und Auflageelement aufliegen. Um hieraus resultierende Fehler zu kompensieren, lässt sich die Querneigung der Rundballenpresse gegenüber der Horizontalen mittels eines Neigungssensors ermitteln.

Aus DE 199 06 611 A1 ist eine Ballenpresse mit einem Wiegesystem bekannt, bei dem die Gewichtsermittlung auf Basis eines gegenüber der Tragachse vertikal beweglichen und auf Federn gelagertem Pressengehäuse erfolgt. Der Abstand zwischen Pressengehäuse und Tragachse ist abhängig vom Gewicht des im Pressengehäuse befindlichen Ballens, so dass hieraus ein Rückschluss auf das Gewicht des Ballens ableitbar ist. Eine Schrägstellung der Ballenpresse kann mit einem kardanisch aufgehängten Pendel oder mit einem Neigungssensor gemessen werden. Auf Basis eines so ermittelten Sensorwertes ermöglicht eine Auswertelektronik eine Korrektur der ermittelten Gewichtswerte.

Aus DE 696 29 200 T2 ist ein Fahrzeug mit einer Ladungsmessung für den Ernteertrag bekannt, das eine Wiegeeinrichtung, eine Positionserfassungseinrichtung und eine Bestimmungseinrichtung zur Zuordnung eines ermittelten Gewichts zur jeweiligen Ortsposition aufweist.

Zur Kompensation von Störgrößen werden die nachfolgenden Maßnahmen vorgeschlagen:
- Messfehler bei der sensorgeschützten Gewichtsermittlung sollen durch Einsatz eines "Tiefpassfilters", der Signale oberhalb einer vordefinierten Frequenz ausfiltert, beseitigt werden.
- Durch Bodenunebenheiten verursachte Messwert-Schwankungen sollen durch Mittelwertbildung ausgeglichen werden.
- Messfehler, deren Ursache die Neigung des Geländes ist, sollen durch einen Sensor zur Erfassung der Bodenneigung ausgeglichen werden.

Aus EP 2 745 675 A1 ist eine Ballenpresse mit Wiegeeinrichtung bekannt, bei der zur Erhöhung der Messgenauigkeit Neigungssensoren vorgesehen sind.

Die genannten Systeme umfassen einen Laderaum, der mittels einer speziellen Aufhängung möglichst vollständig von der Erntemaschine und von dem Untergrund, von dem das Erntegut aufgenommen wird, entkoppelt ist. Beim Einsatz solcher Systeme an Erntemaschinen, die, systembedingt, beispielsweise mit einer Pick-up-Aufnahmevorrichtung oder einem Rodeschar den Untergrund kontaktieren, beeinflusst der Bodenkontakt jedoch die Ergebnisse der Gewichtsermittlung.

Aufgabe der Erfindung ist es, die beschriebenen Nachteile zu beseitigen und eine Erntemaschine vorzuschlagen, bei der der Einfluss von auf das Wiegesystem einwirkenden Störgrößen erkannt und kompensiert oder zumindest reduziert wird.

Diese Aufgabe wird gelöst durch eine Erntemaschine mit den Merkmalen des Anspruchs 1.

Die erfindungsgemäße Erntemaschine umfasst ein Sensorsystem mit wenigstens einem Sensor welcher zur Ermittlung einer Störgröße vorgesehen ist, die auf die im Laderaum der Erntemaschine befindliche Masse (M) einwirkt. Weiterhin ist der Datenprozessor so konfiguriert, dass er eine um die Störgröße bereinigte positionsbezogenen Gewichtsermittlung durchführt.

### Definitionen:

Unter einer Störgröße wird ein Umgebungseinfluss verstanden, der die vom Wiegesystem ermittelten Gewichtsdaten beeinflusst. Eine Störgröße kann beispielsweise eine Beschleunigung sein, die auf die im Laderaum der Erntemaschine befindliche Masse an Erntegut einwirkt. Eine solche Beschleunigung tritt beispielsweise bei Kurvenfahrt und/oder beim Abbremsen oder Beschleunigen der Erntemaschine auf.

Weiterhin kann eine Störgröße auch mechanisch bedingt sein. So können sich durch ein einfederndes Fahrwerk die Hebelwege ändern oder es können in den Hydraulikzylindern des Fahrwerks sogenannte stick-slip-Effekte auftreten, die die Kolbenstange ruckeln lassen. Das bedeutet, die Kolbenstange verfährt im engen Grenzbereich zwischen Haft- und Gleitreibung und das Ruckeln beeinflusst die von den Wiegesensoren ermittelten Gewichtsdaten.

Auch das Abweichen des Fahrzeuges von einer vordefinierten Nulllage stellt eine Störgröße dar. Hintergrund ist, dass die Gewichtsermittlung in aller Regel auf Basis der vordefinierten Nulllage und den von den Wiegesensoren ermittelten Daten basiert. Eine Gewichtsermittlung, die durch eine Abweichung des Fahrzeuges zur Nulllage beeinträchtigt ist, kann beispielsweise durch eine statische Lagekompensation ausgeglichen werden. Der Erfindung liegt der Gedanke zu Grunde, dass ein Wiegesystem einer Erntemaschine zwar in aller Regel in der Lage ist, kontinuierlich Gewichtsdaten zu ermitteln, diese Gewichtsdaten in Abhängigkeit von einem momentanen Betriebszustand der Erntemaschine jedoch fehlerbehaftet sein können. Dieser Fehler wird erfindungsgemäß dadurch reduziert, dass mittels wenigstens eines Sensors wenigstens eine auf das Wiegesystem einwirkende Störgröße ermittelt und der Einfluss der wenigstens einen Störgröße durch einen entsprechend konfigurierten Datenprozessor bei der Ertragskartierung berücksichtigt, bzw. möglichst umfassend kompensiert wird.

Eine Störgröße kann weiterhin dadurch bedingt sein, dass die für das Wiegen des Ernteguts erforderliche Entkopplung von Laderaum und Umgebung betriebsbedingt beeinträchtigt ist. Ein solcher Fall kann beispielsweise auftreten, wenn zwar die Erntemaschine ein Wiegesystem aufweist, bei dem Deichsel und Fahrwerk durch Wiegesensoren vom Laderaum und den mit dem Laderaum verbundenen Aggregaten entkoppelt sind, jedoch die mit dem Laderaum verbundene Aufnahmevorrichtung bei der Erntegutaufnahme den Boden kontaktiert. Eine Beeinträchtigung der Entkopplung kann deshalb eine Störgröße bei der Gewichtsermittlung darstellen.

Die Erntemaschine kann eine Erntegutaufnahmevorrichtung, beispielsweise eine Pick-up oder einen Rodeschar aufweisen. Im Arbeitseinsatz nimmt die Erntegutaufnahmevorrichtung eine Schwimmstellung und/oder Arbeitsstellung und im Transportmodus eine Transportstellung ein. Das Sensorsystem umfasst einen Sensor zur Erfassung der Position der Erntegutaufnahmevorrichtung. Bei dem Sensor kann es sich beispielsweise um einen Näherungssensor, eine Lichtschranke, einen Ultraschallsensor oder einen Winkelsensor handeln. Bei in Schwimmstellung und/oder Arbeitsstellung befindlicher Erntegutaufnahmevorrichtung kontaktiert diese und/oder etwaige an der Erntegutaufnahmevorrichtung angebrachten Stützräder den Boden. In Schwimmstellung und/oder Arbeitsstellung ist die Erntegutaufnahmevorrichtung über ein Drehlager mit dem Fahrzeugrahmen der Erntemaschine verbunden und um die durch die Drehlager definierte Drehachse schwenkbar. Bei der Vorwärtsfahrt folgt die Erntegutaufnahmevorrichtung der Bodenkontur. Alternativ oder ergänzend kann auch eine Linearführung vorgesehen sein. Handelt es sich bei der Erntegutaufnahmevorrichtung um eine Pick-up, so wird diese, und damit auch eine an der Pick-up vorgesehene Trommel zur Aufnahme des Ernteguts, insgesamt um die Drehachse auf und ab bewegt und folgt ebenfalls der Bodenkontur.

Wie bereits erwähnt, sind Aufnahmevorrichtungen für Erntegut, insbesondere Pick-up-Aufnahmevorrichtungen, in aller Regel nicht vom Laderaum und damit vom Wiegesystem entkoppelt. Somit reduziert sich durch den Bodenkontakt der Aufnahmevorrichtung ein vom Wiegesystem ermitteltes Gesamtgewicht um den Gewichtsanteil, der von der den Boden kontaktierenden Aufnahmevorrichtung nicht auf das Wiegesystem, sondern auf den Boden übertragen wird.

Hinsichtlich des auf den Boden einwirkenden Gewichtsanteils kann im Datenprozessor, oder in einem mit dem Datenprozessor verbundenen Datenspeicher, ein Korrekturfaktor hinterlegt sein, den der Datenprozessor für eine um die Störgröße bereinigte Gewichtsermittlung berücksichtigt. Dabei kann in einer einfachen Ausführung ein konstanter Korrekturfaktor vorgesehen sein, der vom Datenprozessor berücksichtigt wird, wenn der zur Erfassung der Aufnahmevorrichtungs-Position vorgesehene Sensor detektiert, dass sich die Aufnahmevorrichtung in Schwimmstellung und/oder Arbeitsstellung befindet.

Ergänzend oder alternativ zu einem konstanten, also statischen, Korrekturfaktor kann im Datenprozessor auch ein dynamischer Korrekturfaktor berechnet und bei Bedarf berücksichtigt werden. Die Berechnung eines dynamischen Korrekturfaktors kann beispielsweise auf Basis eines im Datenprozessor oder Datenspeicher hinterlegten Kennlinienfeldes erfolgen. Hiermit wird erreicht, dass das ermittelte Gewicht in Abhängigkeit der ermittelten Störgröße dynamisch, sprich situativ korrigiert wird. Der besondere Vorteil eines dynamischen Korrekturfaktors liegt in einer Verbesserung der Genauigkeit der Gewichtsermittlung, da insbesondere durch Fahrdynamik und/oder sich ändernde Erntebedingungen ein unterschiedlicher Einfluss zu erwarten ist, der über die Einbeziehung eines statischen Korrekturfaktor nicht bzw. nur bedingt kompensierbar ist.

In aller Regel befindet sich die Aufnahmevorrichtung im Arbeitseinsatz in Schwimmstellung, so dass ihre Höheneinstellung gegenüber dem Boden durch geeignete Mittel, insbesondere Tasträder, konstant gehalten werden kann. Bei widrigen Erntebedingungen, beispielsweise sehr nassem Untergrund, oder durch Fehlbedienung kann es jedoch vorkommen, dass die Aufnahmevorrichtung im Arbeitseinsatz nicht in Schwimmstellung, sondern fixiert betrieben wird. In diesem Betriebszustand ist eine Auswertung der Wiege-Sensorik gegebenenfalls sehr ungenau, da sich die Maschine im schlechtesten Fall auf der Aufnahmevorrichtung abstützt und somit das Gewicht verfälscht. Zur Kompensation einer solchen Störgröße kann ein konstanter oder variabler Korrekturfaktor im Datenspeicher hinterlegt sein, der vom Datenprozessor gegebenenfalls berücksichtigt wird.

Sowohl bei Stillstand der Erntemaschine als auch bei gleichförmiger Fahrt ohne Beschleunigung und auf ebenem Untergrund messen die Wiegesensoren in gewünschter Weise ein Gesamtgewicht. Dieses Gesamtgewicht setzt sich zusammen aus dem Gewicht des Laderaums inklusive der darin befindlichen Masse an Erntegut und dem Gewicht der mit dem Laderaum verbundenen und nicht durch Wiegesensoren entkoppelten Aggregate. Da das Gewicht von Laderaum und Aggregaten konstant und bekannt ist, lässt sich aus einem mittels des Wiegesystems ermittelten Gesamtgewicht das Gewicht der Ladung ableiten.

Eine weitere Störgröße kann aus einer Lageveränderung des Wiegesystems, beziehungsweise der Wiegesensoren des Wiegesystems, gegenüber der Umgebung resultieren. So ändert sich beispielsweise die Neigung des Erntefahrzeuges bei Hangfahrt oder bei Betätigung einer sogenannten Knickdeichsel.

Der Einfluss der Störgrößen auf das vom Wiegesystem ermittelte Gewicht kann auch vom verwendeten Wiegesystem abhängen. Nicht ausgeschlossen ist weiterhin, dass mehrere Störgrößen gleichzeitig das Wiegesystem beeinflussen. Erfindungswesentlich ist, dass wenigstens eine Störgröße von einem hierfür vorgesehenen Sensor detektiert und ein insofern die Störgröße charakterisierender und vom Sensor ermittelter Messwert an den Datenprozessor der Erntemaschine übertragen wird.

Es können auch mehrere Sensoren zur Detektion mehrerer Störgrößen vorgesehen sein, so dass der Datenprozessor nicht nur den Einfluss einer, sondern den Einfluss mehrerer Störgrößen auf die Gewichtsermittlung berücksichtigt und entsprechend korrigierte Gewichtsdaten ermittelt. Die für die Ermittlung von Störgrößen vorgesehenen Sensoren bilden gemeinsam ein Sensorsystem. Dabei können zwei oder mehrere Sensoren auch körperlich eine Baugruppe bilden. Es ist jedoch auch möglich, dass die Sensoren des Sensorsystems an unterschiedlichen Stellen der Erntemaschine angebracht und lediglich über Datenleitungen und/oder Funkverbindungen sowie den für die Datenauswertung vorgesehenen Datenprozessor miteinander verbunden sind.

In einer bevorzugten Ausführungsform umfasst das Sensorsystem einen Beschleunigungssensor und/oder ein Gyroskop. Ein Beschleunigungssensor ermittelt eine lineare Beschleunigung entlang einer oder mehrere Achsen und ist besonders gut geeignet zur Kompensation einer Störgröße, die beim Bremsen oder beim Beschleunigen des Fahrzeuges auftritt. Mittels eines Gyroskops lässt sich eine Richtungsänderung und somit eine Kurvenfahrt detektieren. Je nach Geschwindigkeit der Richtungsänderung in Verbindung mit der Fahrgeschwindigkeit resultiert hieraus eine Kurvenbeschleunigung. Ein Gyroskop ist deshalb geeignet, um eine bei Kurvenfahrt auf das Wiegesystem einwirkende Störgröße zu bestimmen. Allgemein wird die hier beschriebene Messeinheit, bestehend aus Beschleunigungssensor und Gyroskop, auch als inertiale Messeinheit (englisch: inertial measurement unit, IMU) bezeichnet.

Ergänzend oder alternativ kann das Sensorsystem einen Winkelsensor zur Ermittlung eines Winkels zwischen einer in Fahrtrichtung weisenden Längsachse der Erntemaschine und einer in Fahrtrichtung ausgerichteten Horizontalen umfassen. Eine solche Winkelmessung ist dann vorteilhaft, wenn die von den verwendeten Wiegesensoren ermittelten Daten von der Ausrichtung der Wiegesensoren abhängig sind.

In einer anderen Ausführungsform wird nicht nur lediglich ermittelt, ob die Aufnahmevorrichtung sich in Schwimmstellung befindet oder nicht, sondern es wird mittels eines Winkelsensors ein Auslenkungswinkel der Aufnahmevorrichtung bestimmt. Unter dem Aufnahmevorrichtungs-Auslenkungswinkel wird der Winkel verstanden, um den die Aufnahmevorrichtung um die Drehachse verschwenkt ist. Als Bezugsgröße kann der Auslenkungswinkel der Aufnahmevorrichtung in Transportstellung oder eine Horizontale dienen. Unabhängig davon, welche Bezugsgröße zu Grunde gelegt wird, lässt sich auf Basis des Auslenkungswinkels ein für den jeweiligen Auslenkungswinkel geeigneter Korrekturwert festlegen und in einem mit dem Datenprozessor verbundenen Datenspeicher hinterlegen. Analog zu einem konstanten Korrekturfaktor kann im Datenprozessor, oder in einem mit dem Datenprozessor verbundenen Datenspeicher, ein dynamischer Korrekturfaktor hinterlegt sein, dessen Größe von der momentanen Winkelstellung abhängig ist. Ebenfalls analog zur Berücksichtigung eines konstanten Korrekturfaktors kann auch ein dynamischer Korrekturfaktor vom Datenprozessor bei der um die Störgröße bereinigten Gewichtsermittlung einbezogen werden.

Alternativ hierzu ist es auch möglich, dass die Aufnahmevorrichtung auf Messbolzen gelagert ist, um den Einfluss des "Tastens" zu ermitteln. Dabei kann bei Bedarf neben der vertikal wirkenden Gewichtskraft auch der horizontale Einfluss, der beispielsweise beim Durchfahren einer Senke relevant wird, einbezogen werden. Mit den genannten Messbolzen detektierte Zug- und Druckkräfte lassen sich relativ einfach auswerten und in die Gewichtsermittlung einbeziehen.

Weiterhin wäre es denkbar, den hydraulischen Druck im Zylinder bei der Aktion "Aufnahmevorrichtung-Heben" zu detektieren und diesen Wert zur Korrektur nutzen. Hierdurch können insbesondere schnelle Bewegungen erfasst werden, bei denen durch die hohe Fließgeschwindigkeit des Öls ein entsprechender Staudruck und damit eine Auswirkung auf das Gewicht entsteht.

Soweit es sich bei der Erntemaschine um eine gezogene Erntemaschine handelt, umfasst diese eine Deichsel zur Anhängung an eine Zugmaschine. Bei einer mit Wiegesystem ausgerüsteten gezogenen Erntemaschine ist in aller Regel einer der Wiegesensoren in die Deichsel integriert. Die Ausrichtung der Deichsel, und damit auch die Ausrichtung des Wiegesensors, ist abhängig von der Anhängehöhe und, bei einer Erntemaschine mit Knickdeichsel, von der Stellung der Knickdeichsel. Um eine aus der Deichselstellung resultierende Störgröße zu berücksichtigen kann ein Winkelsensor zur Ermittlung eines Winkels zwischen einer Längsachse des Wiegesensors und einer in Fahrtrichtung ausgerichteten Längsachse der Erntemaschine vorgesehen sein. Auf Basis der vom genannten Winkelsensor an den Datenprozessor übermittelten Werte kann der Datenprozessor einen konstanten oder, bei höheren Ansprüchen an die Genauigkeit, dynamischen Korrekturfaktor in die Gewichtsermittlung einbeziehen.

Eine weitere Störgröße kann die Gewichtsermittlung beeinflussen, wenn die Erntemaschine ein hydraulisches Fahrwerk aufweist und somit die Position von Fahrwerk und Laderaum zueinander variabel ist. Weiterhin ändert sich bei einer Änderung der Fahrwerkshöhe die relative Position zwischen Fahrwerk und Knickdeichsel. Bei einer Erntemaschine mit hydraulischem Fahrwerk kann deshalb ein Sensor vorgesehen sein, mittels dessen die Position des Fahrwerks gegenüber dem Fahrzeugrahmen bestimmbar ist. Die momentane Position von Fahrwerk und Rahmen kann somit auf Basis der vom genannten Sensor ermittelten Daten ebenfalls vom Datenprozessor in die Gewichtsermittlung einbezogen werden.

In einer weiteren Ausführung kann die Erntemaschine wenigstens einen Sensor zur Ermittlung wenigstens eines Inhaltsstoffes des Ernteguts aufweisen. Der Datenprozessor ist dann so konfiguriert, dass nicht nur eine positionsbezogenen, sondern auch eine die Inhaltsstoffe des Ernteguts berücksichtigende Gewichtsermittlung möglich ist. Aus der Verknüpfung von momentanen Gewichtsdaten und momentanen Inhaltsstoffdaten lässt sich mittels des Datenprozessors eine inhaltsstoffbezogene Ertragskartierung ableiten.

Die erfindungsgemäße Aufgabe wird auch gelöst durch ein Verfahren zum Betrieb einer Erntemaschine mit den Merkmalen des Anspruchs 8. Die Erntemaschine, bei der es sich beispielsweise um einen Ladewagen oder eine Ballenpresse zur Ernte von Halm- und Blattgut oder um eine Erntemaschine für Hackfrüchte wie Kartoffeln oder Rüben handeln kann, umfasst wenigstens folgende Komponenten:
- eine Erntegutaufnahmevorrichtung,
- einen Laderaum als Speicher für das aufgenommene Erntegut,
- ein Wiegesystem zur Bestimmung einer Masse des im Laderaum enthaltenen Ernteguts,
- ein positionsbestimmendes System, beispielsweise ein GPS-System oder eine Schnittstelle zu einem positionsbestimmenden System eines die Erntemaschine ziehenden Zugfahrzeuges,
- ein Sensorsystem mit wenigstens einem Sensor zur Ermittlung wenigstens eines Fahrzeug-Betriebszustandes,
- einen Datenprozessor, der zur Durchführung einer positionsbezogenen Ertragsbestimmung konfiguriert ist.

Bei dem erfindungsgemäßen Verfahren wird mittels des Sensorsystems eine Position der Erntegutaufnahmevorrichtung bestimmt und an den Datenprozessor übermittelt. Der Datenprozessor ermittelt auf Basis der vom Sensorsystem übermittelten Daten einen Korrekturwert und wendet diesen Korrekturwert auf die vom Wiegesystem ermittelten Gewichtsdaten an, so dass der Einfluss einer oder mehrere die Gewichtsmessung beeinträchtigen Störgröße reduziert wird.

Hierdurch erhöht sich die Genauigkeit einer im Arbeitseinsatz durchgeführten, ortsbezogenen Gewichtsermittlung und resultierend hieraus auch die Genauigkeit etwaiger aus der ortsbezogenen Gewichtsermittlung abgeleiteter Ertragskartierungen.

Insbesondere bevorzugt ist ein Verfahren zum Betrieb einer Erntemaschine, bei der die Störgröße weiterhin durch etwaige auf das im Laderaum der Erntemaschine befindliche Erntegut einwirkende Beschleunigungen gebildet wird. Um diese Störgröße mittels des Datenprozessors zu reduzieren wird die genannte Beschleunigung gemessen indem
- das Sensorsystems wenigstens einen Beschleunigungssensor umfasst, welcher eine lineare Beschleunigung entlang einer oder mehrere Achsen ermittelt und/oder
- das Sensorsystems wenigstens ein Gyroskop zur Ermittlung einer Richtungsänderung umfasst.

Die ermittelten Daten werden an den Datenprozessor übermittelt und bei der Ermittlung des Gewichts berücksichtigt.

In ergänzenden oder alternativen Verfahrensschritten können Messungen von anderen Störgrößen in die vom Datenprozessor durchgeführte Gewichtsermittlung einbezogen werden. Hierbei kann es sich beispielsweise um die Kompensation von Störgrößen handeln, die aus einer sich verändernden Ausrichtung der Erntemaschine oder einer Bodenberührung der Aufnahmevorrichtung resultieren.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine Erntemaschine in Form eines Ladewagens in einer perspektivischen Darstellung;
- Fig. 2: zeigt das Fahrwerk der in Fig. 1 abgebildeten Erntemaschine;
- Fig. 3: zeigt das Vorderteil der Erntemaschine in einer Schnittdarstellung mit in Schwimmstellung abgesenkter Pick-up;
- Fig. 4: zeigt das Vorderteil der Erntemaschine in einer Schnittdarstellung mit in Transportstellung angehobener Pick-up;
- Fig. 5: zeigt ein Gespann aus einem Zugfahrzeug und einer Erntemaschine mit in Streckstellung befindlicher Knickdeichsel;
- Fig. 6: zeigt das Gespann aus Zugfahrzeug und Erntemaschine gemäß Fig. 5 mit gehobener Knickdeichsel.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten der Erntemaschine im Betriebsmodus entspricht.

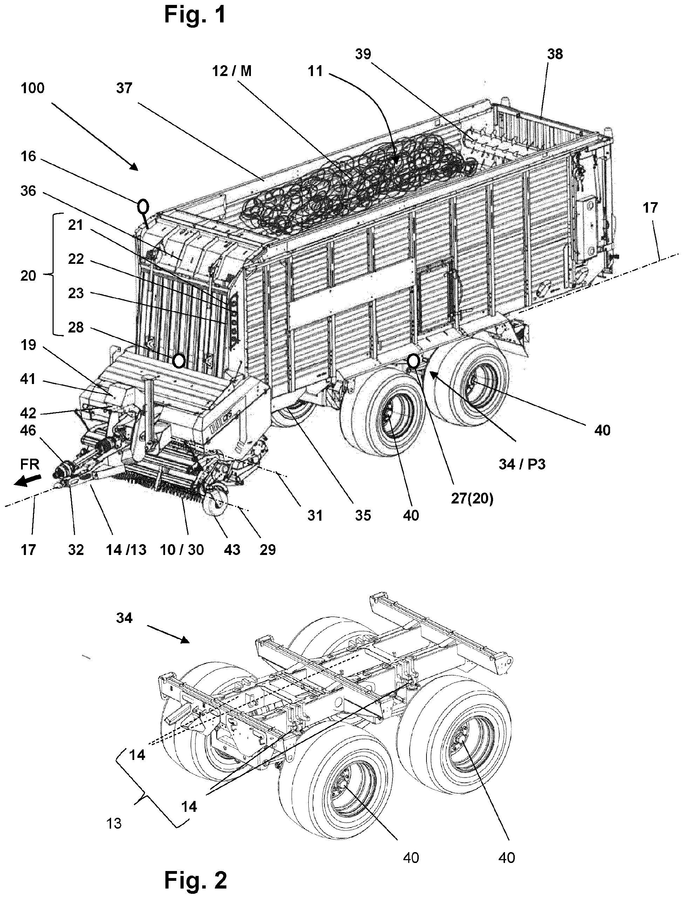

Figur 1 zeigt eine Erntemaschine 100 mit einer Längsachse 17. Bei der Erntemaschine 100 handelt es sich um einen Ladewagen. Alternativ könnte an Stelle eines Ladewagens auch eine andere Erntemaschine zur Ernte von Halm- und Blattgut, beispielsweise eine Ballenpresse, vorgesehen sein. In diesem Fall wäre die Sensor- und Steuerungskonfiguration an diese andere Erntemaschine anzupassen.

Der Ladewagen kann als Starrdeichselanhänger ausgeführt sein und weist in dem Ausführungsbeispiel der Fig. 1 ein hydraulisches Fahrwerk 34 mit zwei Achsen 40 auf. Unter einem hydraulischen Fahrwerk wird ein Fahrwerk verstanden, bei dem die Position wenigstens einer Achse hydraulisch variierbar, vorzugsweise höhenverstellbar ist. Alternativ könnte an Stelle eines hydraulischen Fahrwerkes auch ein mechanisches Fahrwerk, beispielsweise ein Boogie-Fahrwerk vorgesehen sein.

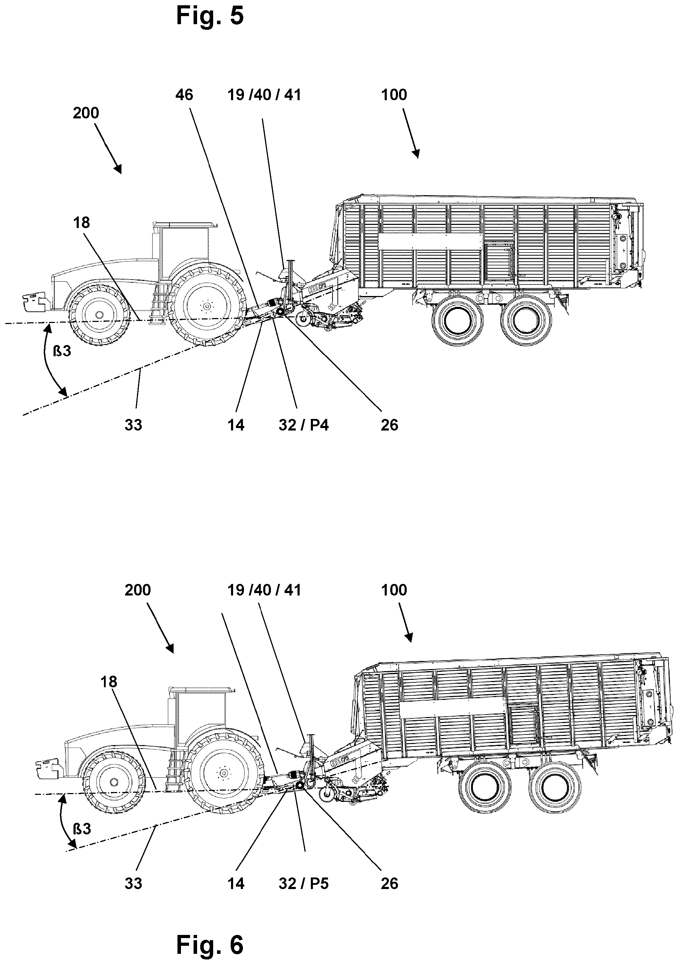

Mittels einer Deichsel 13, bei der es sich im dargestellten Ausführungsbeispiel um eine Knickdeichsel handelt, ist die Erntemaschine 100 an ein Zugfahrzeug 200 (vgl. Fig. 5) koppelbar. Die Ausführung der Erntemaschine 100 als Tandemanhänger ist vorteilhaft, jedoch nicht zwingend. Alternativ ist auch eine andere Anhängerausführung der Erntemaschine oder eine als Selbstfahrer ausgeführte Erntemaschine möglich.

Der Ladewagen weist weiterhin einen von Stirnwand 36, zwei Seitenwänden 37 und Heckwand 38 umbauten Laderaum 11 auf, der als Speicher für aufgenommenes Erntegut 12 dient. Der Ladewagen ist für Halm- und Blattgut - vorzugsweise für geschnittenes Gras - als Erntegut 12 vorgesehen. Der Laderaum 11 kann mit einer Einrichtung zum stetigen und/oder unstetigen Fördern des Ernteguts - wie zum Beispiel einem sogenannten Kratzboden - zu einem in Bezug auf die Fahrtrichtung FR des Ladewagens hinteren Bereich des Ladewagens ausgerüstet sein. Im hinteren Bereich des Laderaums 11 sind mehrere Dosierwalzen 39 angeordnet, die gemeinsam eine Einrichtung zur automatischen Entladung des Erntegutes 12 bilden.

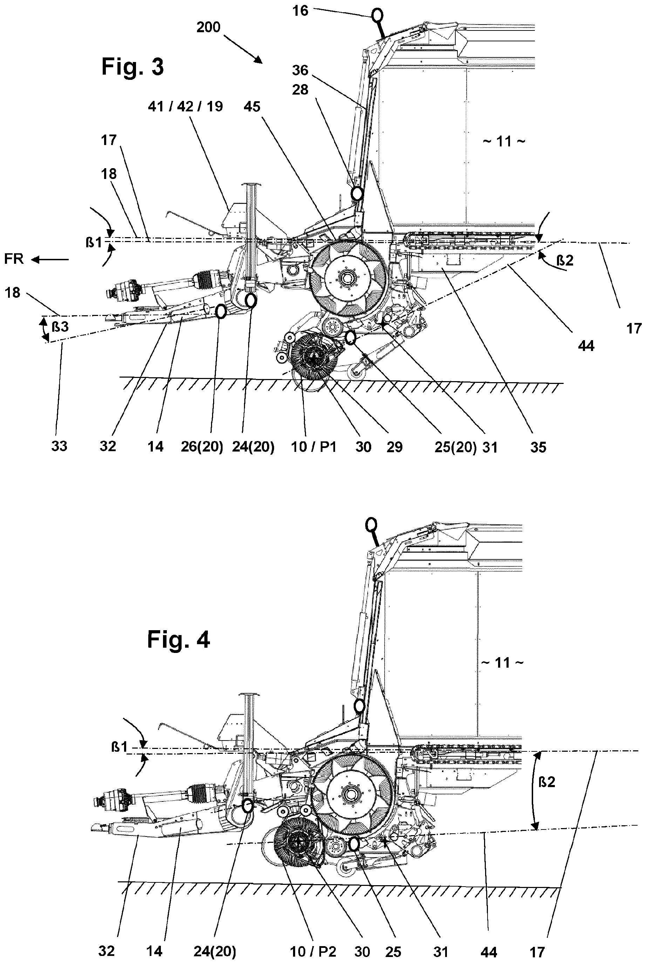

Der Ladewagen weist darüber hinaus eine Erntegutaufnahmevorrichtung 10 mit einer um eine Drehachse 29 drehbaren Trommel 30 und darauf angeordneten Aufnahmezinken auf. Die Aufnahmevorrichtung 10 ist in Form einer sogenannte Pick-up ausgebildet. Für die Fahrt zum und vom Einsatzort kann die Pick-up 10, die um eine Drehachse 31 schwenkbar ist, in eine Transportstellung P2 angehoben und dort fixiert werden. Im Arbeitseinsatz ist die Fixierung gelöst und die Pick-up 10, bzw. deren Stützräder 43 kontaktiert den Boden. Bei der Vorwärtsfahrt in Fahrtrichtung FR werden etwaige Bodenunebenheiten ausgeglichen, indem die Stützräder 43 der Bodenkontur folgen und die Trommel 30 entsprechend der Bodenkontur anheben beziehungsweise absenken. Die Pick-up 10 wird dabei um einen Winkel β2 (vgl. Fig. 3) um die Drehachse 31 geschwenkt.

Im Arbeitseinsatz fördert die Pick-up 10 das Erntegut 12 zu einer Pressvorrichtung mit einem Rotor 45. Um das Erntegut 12 zu zerkleinern, kann die Pressvorrichtung ein Schneidwerk aufweisen. Das Erntegut 12 wird durch die Pressvorrichtung verdichtet, optional durch das Schneidwerk geschnitten und schließlich in den Laderaum 11 gedrückt.

Da Erntegutaufnahmevorrichtungen 10 aus dem Stand der Technik bekannt sind, wird hier auf eine detaillierte Beschreibung verzichtet und beispielsweise auf die Schrift DE 10 2016 103 108 A1 verwiesen.

Die Ausführung der Erntegutaufnahme nach der technischen Lehre der DE 10 2016 103 108 A1 ist vorteilhaft, jedoch nicht zwingend. Alternativ kann die Erntegutaufnahme auch anders ausgeführt sein. Beispielsweise kann an Stelle des Rotors 45 ein Schwingenförderer (nicht dargestellt) vorgesehen sein. Die Teilfunktionen der Erntegutaufnahmevorrichtung 10, nämlich das Aufnehmen, Weiterfördern, optionale Schneiden, Verdichten und das Weiterfördern des Erntegutes in den Laderaum 11 des Ladewagens können somit auf verschiedene Weisen erfolgen.

Der Antrieb der angetriebenen Einrichtungen des Ladewagens erfolgt durch eine mechanische und/oder hydraulische und/oder elektrische Kopplung des Ladewagens an ein Zugfahrzeug 200. Die mechanische Kopplung umfasst eine Zapfwellenanordnung 46. Die Zapfwellenanordnung 46 kann über ein mechanisches Getriebe auf die Pick-up 10, die Trommel 30, die Pressvorrichtung, den Rotor 45, den Kratzboden und die Verteilwalzen 39 wirken. Alternativ kann die Zapfwellenanordnung 46 auch auf eine Hydraulikpumpe eines oder mehrerer hydrostatisches/er Getriebe, bestehend aus einer zentralen Hydraulikpumpe und wenigstens einem, vorzugsweise mehreren Hydraulikmotor(en) wirken.

Die Zapfwellenanordnung 46 umfasst hier einen Lagerbock, der auf einer Deichsel 32 angeordnet ist. Die Zapfwellenanordnung 46 umfasst im dargestellten Ausführungsbeispiel mehrere Gelenkwellen mit entsprechenden Gelenken und ist durch geeignete Mittel mit einer Zapfwelle des Zugfahrzeuges 200 verbunden.

Die Erntemaschine 100 weist ferner ein Wiegesystem 13 zur Bestimmung einer Masse M des im Laderaum 11 befindlichen Ernteguts 12 auf. Das Wiegesystem 13 arbeitet vorzugsweise nach dem Prinzip der elastischen Dehnung und der daraus resultierenden mechanischen Spannung in einem Werkstoff. Dazu ist der Laderaum 11 mit in einer Anzahl von beispielsweise vier oder sechs Wiegesensoren 14 auf dem Fahrgestell 34 gelagert. Ein weiterer Wiegesensor 14 ist in die Deichsel 32 integriert. An den Wiegesensoren 14 sind Spannungs-Dehnungsmesstreifen appliziert, die die lokale Dehnung in den Wiegesensoren 14 messen, die zu einer lokalen mechanischen Spannung in den Wiegesensoren 14 führt. Bei bekanntem E-Modul des Werkstoffs, aus dem die Wiegesensoren 14 hergestellt sind, kann so auf die momentane Masse des Erntegutes geschlossen werden, das sich im Laderaum 11 der Erntemaschine 10 befindet. Vorzugsweise sind die Wiegesensoren 14 aus einem Stahlwerkstoff hergestellt. Alternativ kann das Wiegesystem 13 auch nach einem anderen Wirkprinzip, beispielsweise als hydraulisches Wiegesystem, arbeiten.

Die Erntemaschine 100 ist im dargestellten Ausführungsbeispiel mit einem positionsbestimmenden System 16 in Form eines GPS-System ausgerüstet mittels dessen Positionsdaten der Erntemaschine 100 erfasst werden. Alternativ kann auch das Zugfahrzeug 200 mit einem GPS-System ausgerüstet sein, welches Positionsdaten des Erntemaschine 100 erfasst und die ermittelten Daten an einen Datenprozessor 19 übermittelt.

Die Erntemaschine 100 weist ferner einen Datenspeicher 41 auf, der im dargestellten Ausführungsbeispiel gemeinsam mit dem Datenprozessor 19 in ein Steuergerät 42 integriert ist. Der Datenprozessor 19 steht mit einem Sensorsystem 20 sowie dem positionsbestimmenden GPS-System 16 und dem Wiegesystem 13 in Wirkverbindung.

Der Datenprozessor 11 bringt die positionsbestimmenden Daten, die Wiegedaten und die mit dem Sensorsystem 20 ermittelten Daten in einen Zusammenhang, bereitet diese gewonnenen Daten auf und speichert sie ab, so dass mit der Erntemaschine 100 eine positionsbezogene Ertragserfassung durchführbar ist.

Der Datenprozessor 19 kann ferner dafür ausgelegt sein, die Ermittlung der Gewichtsdaten in einer einstellbaren Anzahl je Zeiteinheit durchzuführen. Dadurch kann das Wiegesystem 13 und auch das Sensorsystem 20 vorteilhaft den jeweiligen Ernte- und/oder Auswertbedingungen angepasst werden. Weiterhin kann vorgesehen sein, dass der Datenprozessor zu den von den Sensoren übermittelten Messwerten Mittelwerte oder Mediane bildet um so Messfehler zu bereinigen und/oder Messspitzen zu glätten.

Wesentlich ist, dass der Datenprozessor 19 eine oder mehrere auf das Wiegesystem 13 einwirkende Störgrößen berücksichtigt, indem mittels eines Sensorsystems 20 Daten dieser Störgrößen ermittelt, an den Datenprozessor übermittelt und in die Bestimmung der Masse M des Ernteguts 12 einbezogen werden. Das Sensorsystem 20 kann einen oder mehrere Sensoren 21, 22, 23, 24, 25, 26, 27, 28 umfassen.

Die Sensoren 21, 22, 23, 24, 25, 26, 27, 28 können beispielsweise folgende Störgrößen und/oder Betriebszustände der Erntemaschine 100 erfassen:
- Mittels eines Beschleunigungssensors 21 kann die lineare Beschleunigung der Masse M in Fahrtrichtung FR beim Beschleunigen und Abbremsen bestimmt werden;
- Mittels eines Gyroskops 22 kann eine Richtungsänderung und somit eine Kurvenfahrt detektiert werden.
- Mittels eines ersten Winkelsensor 23 kann ein Winkel β1 zwischen einer in Fahrtrichtung FR weisenden Längsachse 17 der Erntemaschine 100 und einer in Fahrtrichtung FR ausgerichteten Horizontalen 18 bestimmt werden. Hierdurch kann die Neigung der Erntemaschine - und damit auch die Neigung der Wiegesensoren 14- in die Bestimmung der Masse M einbezogen werden.
- Mittels eines Sensors 24 kann festgestellt werden, ob die Erntegutaufnahmevorrichtung 10 sich in Schwimmstellung P1 oder Transportstellung P2 befindet.
- Mittels eines zweiten Winkelsensors 25 kann ein Auslenkungswinkel β2 detektiert werden, den eine in Schwimmstellung P1 befindliche Pick-up gegenüber der in Fahrtrichtung FR weisenden Längsachse 17 der Erntemaschine 100 ausbildet.
- Mittels eines dritten Winkelsensors 26 kann ein Winkels ß3 zwischen einer Längsachse 33 eines in die Deichsel 32 integrierten Wiegesensors 14 und der in Fahrtrichtung FR ausgerichteten Horizontalen 18 der Erntemaschine 100 ermittelt werden.
- Mittels eines Sensors 27 kann die Position des hydraulischen Fahrwerks 34 gegenüber dem Fahrzeugrahmen 35 festgestellt werden.
- Mittels eines Sensors 28, der im dargestellten Ausführungsbeispiel in die Stirnwand integriert ist, können ein oder mehrere Inhaltsstoffe des Ernteguts 12 ermittelt werden. Der Sensor 28 kann zur Messung der Feuchte und/oder zur Messung anderer Eigenschaften, Merkmale oder Inhaltsstoffe des Erntegutes 12 vorgesehen sein, die für eine Ertragserfassung des Erntegutes 12 relevant sind. Als Sensor 28 ist im dargestellten Ausführungsbeispiel ein Nahinfrarotspektroskopie-Sensor - oder kurz: NIR-Sensoren - vorgesehen. Alternativ kann der Sensor 28 aber auch nach einem anderen Wirkprinzip arbeiten.

Alle Sensoren können als Einzelsensoren oder auch als Sensorgruppen vorgesehen sein, um die benötigten Daten parallel und ggf. redundant zu erfassen. Sowohl bei der parallelen als auch bei der redundanten Erfassung von Daten durch die Sensoren kann eine Mittelwertbildung der ermittelten Messwerte erfolgen. Hierdurch lassen sich Fehler minimieren und/oder unplausible Sensorwerte identifiziert und gegebenenfalls eliminieren.

Figur 2 zeigt das Fahrwerk 34 der in Fig. 1 abgebildeten Erntemaschine. Das Fahrwerk 34 weist sechs nach außen weisende Träger für den Laderaum 11 auf. In jeden Träger ist ein Wiegesensor 14 integriert, so dass der Laderaum 11 insgesamt über die Wiegesensoren 14 an das Fahrwerk 34 gekoppelt ist. Die genannten Wiegesensoren 14 bilden gemeinsam mit dem in der Deichsel 32 angeordneten Wiegesensor 14 das Wiegesystem 13. Alternativ zu der im Ausführungsbeispiel beschriebenen Ausführungsform sind auch andere Positionen zur Anbringung der Wiegesensoren möglich. Beispielsweise können bei einem Fahrzeug mit Boogie-Fahrwerk die Wiegesensoren in die Bolzen der Boogie-Achse integriert sein.

Bei dem Fahrwerk (vgl. Fig. 2) handelt es sich um ein hydraulisches Fahrwerk 34 mit einer höhenverstellbaren Achse 40, die einen hydraulischen Achsausgleich ermöglicht und so das Fahrverhalten verbessert. Hierdurch können Bodenwellen ausgeglichen und der Bodendruck reduziert werden. Unter ungünstigen Umständen beeinflusst eine momentane Position P3 des hydraulischen Fahrwerks jedoch die von den Wiegesensoren 14 ermittelten momentanen Gewichtsdaten. Im Datenspeicher 41 sind auf die unterschiedliche Positionen P3 des hydraulischen Fahrwerks 34 abgestimmte Korrekturwerte hinterlegt. Die momentane Position P3 des Fahrwerks 34 kann somit bei der Bestimmung der Masse M mittels der Wiegesensoren 14 durch Einbeziehung des jeweils relevanten Korrekturwerts berücksichtigt werden.

Figur 3 zeigt das Vorderteil der Erntemaschine 10 in einer Schnittdarstellung mit in Schwimmstellung P1 abgesenkter Pick-up 10. Mittels eines ersten Winkelsensors 23 ist ein Winkel β1 zwischen einer Horizontalen 18 und der Längsachse 17 der Erntemaschine 100 messbar.

Die Pick-up, und damit die Trommel 30 sind um die Drehachse 31 gegenüber dem Fahrzeugrahmen 35 schwenkbar. Eine Verbindungslinie von Trommelachse 29 und Pick-up-Drehachse 31 kann als Auslenkungsachse 44 bezeichnet werden. Die Auslenkungsachse 44 schließt mit der Längsachse 17 der Erntemaschine 100 einen Winkel ß2 ein. In Transportstellung P2 ist dieser Winkel β2 fixiert. In Schwimmstellung ist der Winkel ß2 dagegen variabel und gibt die momentanen Auslenkung der Trommel gegenüber der Längsachse 17 an.

Der in die Deichsel 32 integrierte Wiegesensor 14 weist eine Längsachse 33 auf. Die Deichsel 32 weist ein Gelenk auf und ist hydraulisch aus einer Streckstellung P4 in eine Knickstellung P5 einknickbar (Knickdeichsel), Wird die Knickdeichsel eingeknickt, ändert sich der Winkel zwischen der Längsachse 33 des Wiegesensors 14 und der in Fahrtrichtung FR ausgerichteten Längsachse 17 der Erntemaschine 100. Ein zwischen den Längsachsen 33 des Wiegesensors 14 und der in Fahrtrichtung FR ausgerichteten Horizontalen (18) der Erntemaschine 100 eingeschlossener Winkel β3 ist mittels eines Winkelsensors 26 messbar.

Die von den Winkelsensoren 23, 25 und 26 ermittelten Daten werden an den im Steuergerät 42 integrierten Datenprozessor 19 übertragen und vom Datenprozessor 19 weiterverarbeitet um etwaige durch Winkelveränderungen bedingte Auswirkungen auf das Wiegesystem 14 zu kompensieren.

Fig. 4 zeigt das Vorderteil der Erntemaschine 100 in einer Schnittdarstellung mit in Transportstellung P2 angehobener Pick-up 10. In einer einfachen Ausführung kann der Sensor 24 lediglich dafür vorgesehen sein, eine Ja/Nein Information hinsichtlich der Frage, ob die Pick-up 10 sich in Transportstellung befindet oder nicht, zu liefern. Eine solche Information kann beispielsweise durch einen Abstandssensor oder einen Lichtschrankensensor bereitgestellt werden.

Fig. 5 zeigt die Erntemaschine 100, die mittels der Deichsel 32 und der Zapfwellenanordnung 46 an ein Zugfahrzeug 200 gekoppelt ist. Die Deichsel 32 befindet sich in einer Streckstellung P4. Die Längsachse 33 des in die Deichsel 32 integrierten Wiegesensor 32 schließt in Bezug auf die Horizontale 18 einen Winkel β3 ein. Der Winkel β3 ist mittels des Winkelsensors 26 bestimmbar.

Fig. 6 zeigt das Gespann mit in Knickstellung P5 eingeknickter Deichsel 32. Hierdurch neigt sich das Vorderteil der Erntemaschine 100 insgesamt leicht in Richtung Boden. Dementsprechend ändert sich auch der Winkel β3.

### Bezugszeichenliste

- 10: Erntegutaufnahmevorrichtung (Pick-up)
- 11: Laderaum
- 12: Erntegut
- 13: Wiegesystem
- 14: Wiegesensor
- 15: Laderaum
- 16: positionsbestimmendes System
- 17: Längsachse (von 100)
- 18: Horizontale
- 19: Datenprozessor
- 20: Sensorsystem
- 21: Beschleunigungssensor
- 22: Gyroskop
- 23: erster Winkelsensor
- 24: Sensor (zur Positionsbestimmung von 10)
- 25: zweiter Winkelsensor
- 26: dritter Winkelsensor
- 27: Sensor (zur Positionsbestimmung von 34)
- 28: Sensor (zur Inhaltsstoffbestimmung)
- 29: Trommelachse
- 30: Trommel (von 10)
- 31: Drehachse (von 30)
- 32: Deichsel
- 33: Längsachse (von 14)
- 34: Fahrwerk
- 35: Fahrzeugrahmen
- 36: Stirnwand
- 37: Seitenwand
- 38: Heckwand
- 39: Dosierwalze
- 40: Achse
- 41: Datenspeicher
- 42: Steuergerät
- 43: Stützrad
- 44: Auslenkungsachse
- 45: Rotor
- 46: Zapfwellenanordnung

- 100: Erntemaschine
- 200: Zugfahrzeug

- ß1: Winkel (zwischen 17 und 18)
- ß2: Winkel
- β3: Winkel

- FR: Fahrtrichtung
- M: Masse
- P1: Schwimmstellung (von 10)
- P2: Transportstellung (von 10)
- P3: Position (von 34)
- P4: Streckstellung (von 32)
- P5: Knickstellung (von 32)

## Patentansprüche

1. Erntemaschine (100) umfassend:
- eine Erntegutaufnahmevorrichtung (10),
- einen Laderaum (11) als Speicher für das aufgenommene Erntegut (12),
- ein Wiegesystem (13) zur Bestimmung einer Masse (M) des im Laderaum (11) enthaltenen Ernteguts (12),
- ein positionsbestimmendes System (16), beispielsweise ein GPS-System oder eine Schnittstelle zu einem positionsbestimmenden System eines die Erntemaschine (100) ziehenden Zugfahrzeuges (200),
- ein Sensorsystem (20) zur Ermittlung wenigstens eines Fahrzeug-Betriebszustandes,
- einen Datenprozessor (19), der zur Durchführung einer positionsbezogenen Ertragsbestimmung konfiguriert ist,
- wobei das Sensorsystem (20) wenigstens einen Sensor zur Ermittlung einer auf die im Laderaum (11) befindlichen Masse (M) an Erntegut (12) einwirkenden Störgröße umfasst und der Datenprozessor (19) zur Durchführung einer um die Störgröße bereinigten positionsbezogenen Gewichtsermittlung konfiguriert ist
**dadurch gekennzeichnet, dass** die Erntegutaufnahmevorrichtung (10) im Arbeitseinsatz eine Schwimmstellung und oder eine Arbeitsstellung (P1) und im Transportmodus eine Transportstellung (P2) einnimmt und das Sensorsystem (20) einen Sensor (24) zur Erfassung der Position (P1, P2) der Erntegutaufnahmevorrichtung (10) umfasst, sodass in Abhängigkeit der vom Sensor (24) erfassten Position (P1, P2) ein im Datenprozessor (19) hinterlegter oder berechneter Korrekturfaktor für die um die Störgröße bereinigte Gewichtsermittlung einbeziehbar ist.

2. Erntemaschine (100) nach Anspruch 1, **dadurch gekennzeichnet, dass** es sich bei dem im Datenprozessor (19) hinterlegten oder berechneten Korrekturfaktor um einen statischen und/oder dynamisch variierbaren Korrekturfaktor handelt.

3. Erntemaschine (100) nach Anspruch 1 oder 2, **dadurch gekennzeichnet, dass** das Sensorsystem (20) einen Beschleunigungssensor (21) und/oder ein Gyroskop (22) umfasst.

4. Erntemaschine (10) nach einem der Ansprüche 1 bis 3, **dadurch gekennzeichnet, dass** das Sensorsystem (20) einen ersten Winkelsensor (23) zur Ermittlung eines Winkels (ß1) zwischen einer in Fahrtrichtung (FR) weisenden Längsachse (17) der Erntemaschine (100) und einer in Fahrtrichtung (FR) ausgerichteten Horizontalen (18) vorgesehen ist.

5. Erntemaschine (100) nach einem der Ansprüche 1 bis 4, **dadurch gekennzeichnet, dass** die Erntegutaufnahmevorrichtung (10) eine Trommel (30) umfasst, welche um eine Drehachse (31) schwenkbar ist und ein zweiter Winkelsensor (25) zur Ermittlung eines Auslenkungswinkels (β2) der Trommel (30) gegenüber der in Fahrtrichtung (FR) weisenden Längsachse (17) der Erntemaschine (100) vorgesehen ist.

6. Erntemaschine (100) nach einem der Ansprüche 1 bis 5, **dadurch gekennzeichnet, dass** eine Deichsel (32) zur Anhängung der Erntemaschine (100) an die Zugmaschine (200) vorgesehen ist und das Wiegesystem (13) einen in der Deichsel (32) integrieren Wiegesensor (14) umfasst und ein dritter Winkelsensor (26) zur Ermittlung eines Winkels (ß3) zwischen einer Längsachse (33) des in die Deichsel (32) integrierten Wiegesensors (14) und der in Fahrtrichtung (FR) ausgerichteten Horizontalen (18) der Erntemaschine (100) vorgesehen ist.

7. Erntemaschine (100) nach einem der Ansprüche 1 bis 6, **dadurch gekennzeichnet, dass** die Erntemaschine (100)
- ein hydraulisches Fahrwerk (34) oder ein mechanisches Fahrwerk
- und einen Fahrzeugrahmen (35) umfasst
und ein Sensor (27) vorgesehen ist, mittels dessen eine Position (P3) des hydraulischen Fahrwerks (34) gegenüber dem Fahrzeugrahmen (35) bestimmbar ist.

8. Erntemaschine (100) nach einem der Ansprüche 1 bis 7, **dadurch gekennzeichnet, dass** wenigstens ein Sensor (28) zur Ermittlung wenigstens eines Inhaltsstoffes des Ernteguts (12) vorgesehen ist und der Datenprozessor (19) zur Durchführung einer die Inhaltsstoffe des Ernteguts (12) berücksichtigende positionsbezogenen Gewichtsermittlung konfiguriert ist.

9. Verfahren zum Betrieb einer Erntemaschine (100), vorzugsweise eines zur Ernte von Halm- und Blattgut einsetzbaren Ladewagens, wenigstens aufweisend:
- eine Erntegutaufnahmevorrichtung (10),
- einen Laderaum (11) als Speicher für das aufgenommene Erntegut (12),
- ein Wiegesystem (13) zur Bestimmung einer Masse (M) des im Laderaum (15) enthaltenen Ernteguts (12),
- ein positionsbestimmendes System (16), beispielsweise ein GPS-System oder eine Schnittstelle zu einem positionsbestimmenden System eines die Erntemaschine (100) ziehenden Zugfahrzeuges (200),
- ein Sensorsystem (20) mit wenigstens einem Sensor zur Ermittlung wenigstens eines Fahrzeug-Betriebszustandes,
- einen Datenprozessor (19), der zur Durchführung einer positionsbezogenen Ertragsbestimmung konfiguriert ist,
**dadurch gekennzeichnet, dass** mittels des Sensorsystems (20) eine Position (P1, P2) der Erntegutaufnahmevorrichtung (10) bestimmt wird und der Datenprozessor (19) auf Basis der vom Sensorsystem (20) gemessenen und an den Datenprozessor (19) übermittelten Position (P1, P2) wenigstens einen Korrekturwert ermittelt und diesen Korrekturwert auf die vom Wiegesystem (13) ermittelten Gewichtsdaten anwendet, so dass der Einfluss einer sich aus der Position (P1, P2) der Aufnahmevorrichtung (10) ergebenden und die Gewichtsmessung beeinträchtigen Störgröße reduziert wird.

10. Verfahren zum Betrieb einer Erntemaschine (100) nach Anspruch 9, **dadurch gekennzeichnet, dass** als Korrekturwert ein statischer und/oder dynamischer Korrekturwert ermittelt wird.

11. Verfahren zum Betrieb einer Erntemaschine (100) nach Anspruch 10, **dadurch gekennzeichnet, dass**
- das Sensorsystems (20) wenigstens einen Beschleunigungssensor (21) umfasst welcher eine lineare Beschleunigung entlang einer oder mehrere Achsen ermittelt und/oder
- das Sensorsystems (20) wenigstens ein Gyroskop (22) zur Ermittlung einer Richtungsänderung umfasst und/oder
- das Sensorsystems (20) wenigstens einen ersten Winkelsensor (23) und oder einen zweiten Winkelsensor (25) umfasst und/oder
- das Sensorsystems (20) wenigstens einen Sensor (28) zur Inhaltsstoffermittlung umfasst,
- die ermittelten Daten an den Datenprozessor (19) übermittelt werden und,
- die vom Beschleunigungssensor (21) und/oder Gyroskop (22) erfassten Daten bei der Ermittlung des Gewichts berücksichtigt werden.

## Claims

1. Harvesting machine (100) comprising:
- a crop pick-up device (10),
- a loading space (11) as a store for the crop (12) taken up,
- a weighing system (13) for determining a mass (M) of the crop (12) contained in the loading space (11),
- a position-determining system (16), for example a GPS system or an interface to a position-determining system of a towing vehicle (200) towing the harvester (100),
- a sensor system (20) for determining at least one vehicle operating condition,
- a data processor (19) configured to perform a position-related yield determination,
- the sensor system (20) comprising at least one sensor for determining a disturbance variable acting on the mass (M) of harvested crop (12) located in the loading space (11), and the data processor (19) being configured to carry out a position-related weight determination adjusted for the disturbance variable,
**characterised in that** the crop pick-up device (10) assumes a floating position and/or a working position (P1) in the working mode and a transport position (P2) in the transport mode and the sensor system (20) comprises a sensor (24) for detecting the position (P1, P2) of the crop pick-up device (10), so that a correction factor stored or calculated in the data processor (19) for the weight determination adjusted for the disturbance variable can be included as a function of the position (P1, P2) detected by the sensor (24).

2. Harvester (100) according to claim 1, **characterised in that** the correction factor stored or calculated in the data processor (19) is a static and/or dynamically variable correction factor.

3. Harvester (100) according to claim 1 or 2, **characterised in that** the sensor system (20) comprises an acceleration sensor (21) and/or a gyroscope (22).

4. Harvester (100) according to one of claims 1 to 3, **characterised in that** the sensor system (20) comprises a first angle sensor (23) for determining an angle (β1) between a longitudinal axis (17) of the harvester (100) pointing in the direction of travel (FR) and a horizontal line (18) aligned in the direction of travel (FR).

5. Harvester (100) according to one of claims 1 to 4, **characterised in that** the crop pick-up device (10) comprises a drum (30) which is pivotable about an axis of rotation (31) and a second angle sensor (25) is provided for determining a deflection angle (β2) of the drum (30) relative to the longitudinal axis (17) of the harvester (100) pointing in the direction of travel (FR).

6. Harvester (100) according to any one of claims 1 to 5, **characterised in that** a drawbar (32) is provided for coupling the harvesting machine (100) to the tractor (200), and the weighing system (13) comprises a weighing sensor (14) integrated in the drawbar (32), and a third angle sensor (26) is provided for determining an angle (β3) between a longitudinal axis (33) of the weighing sensor (14) integrated in the drawbar (32) and the horizontal (18), oriented in the direction of travel (FR), of the harvesting machine (100).

7. Harvester (100) according to one of claims 1 to 6, **characterised in that** the harvester (100) has
- a hydraulic running gear (34) or a mechanical running gear
- and a vehicle frame (35)
and a sensor (27) is provided, by means of which a position (P3) of the hydraulic running gear (34) relative to the vehicle frame (35) can be determined.

8. Harvester (100) according to one of claims 1 to 7, **characterised in that** at least one sensor (28) is provided for determining at least one constituent of the crop (12) and the data processor (19) is configured for carrying out a position-related weight determination which takes into account the constituents of the crop (12).

9. Method for operating a harvesting machine (100), preferably a loader wagon which can be used for harvesting stalk and leaf material, at least comprising:
- a crop pick-up device (10),
- a loading space (11) as storage for the picked-up crop (12),
- a weighing system (13) for determining a mass (M) of the harvested crop (12) contained in the loading space (15),
- a position-determining system (16), for example a GPS system or an interface to a position-determining system of a towing vehicle (200) towing the harvester (100),
- a sensor system (20) with at least one sensor for determining at least one vehicle operating condition,
- a data processor (19) configured to perform a position-related yield determination,
**characterised in that** a position (P1, P2) of the crop pick-up device (10) is determined by means of the sensor system (20) and the data processor (19) determines at least one correction value on the basis of the position (P1, P2) measured by the sensor system (20) and transmitted to the data processor (19) and applies this correction value to the weight data determined by the weighing system (13) so that the influence of a disturbance variable resulting from the position (P1, P2) of the pick-up device (10) and affecting the weight measurement is reduced.

10. Method for operating a harvesting machine (100) according to claim 9, **characterised in that** a static and/or dynamic correction value is determined as the correction value.

11. Method for operating a harvesting machine (100) according to claim 10,
**characterised in that**
- the sensor system (20) comprises at least one acceleration sensor (21) which determines a linear acceleration along one or more axes and/or
- the sensor system (20) comprises at least one gyroscope (22) for determining a change in direction and/or
- the sensor system (20) comprises at least one first angle sensor (23) and/or one second angle sensor (25) and/or
- the sensor system (20) comprises at least one sensor (28) for content determination,
- the determined data are transmitted to the data processor (19), and
- the data acquired by the acceleration sensor (21) and/or gyroscope (22) are taken into account in determining the weight.

## Revendications

1. Machine de récolte (100) comprenant :
- un dispositif de ramassage de la récolte (10),
- un compartiment de chargement (11) servant de stockage pour la récolte (12) reçue,
- un système de pesage (13) pour déterminer une masse (M) du produit récolté (12) contenu dans le compartiment de chargement (11),
- un système de détermination de la position (16), par exemple un système GPS ou une interface avec un système de détermination de la position d'un véhicule tracteur (200) tirant la machine de récolte (100),
- un système de capteurs (20) pour déterminer au moins un état de fonctionnement du véhicule,
- un processeur de données (19), qui est configuré pour effectuer une détermination du rendement en fonction de la position,
- le système de capteurs (20) comprenant au moins un capteur pour déterminer une grandeur perturbatrice agissant sur la masse (M) de produit récolté (12) se trouvant dans l'espace de chargement (11) et le processeur de données (19) étant configuré pour effectuer une détermination de poids relative à la position, corrigée de la grandeur perturbatrice,
**caractérisé en ce que** le dispositif de ramassage de la récolte (10) prend une position flottante et/ou une position de travail (P1) en mode de travail et une position de transport (P2) en mode de transport et le système de capteurs (20) comprend un capteur (24) pour détecter la position (P1, P2) du dispositif de ramassage de la récolte (10), de sorte qu'en fonction de la position (P1, P2) détectée par le capteur (24), un facteur de correction enregistré ou calculé dans le processeur de données (19) peut être intégré pour la détermination du poids corrigée de la grandeur perturbatrice.

2. Machine de récolte (100) selon la revendication 1, **caractérisée en ce que** le facteur de correction enregistré ou calculé dans le processeur de données (19) est un facteur de correction statique et/ou variable dynamiquement.

3. Machine de récolte (100) selon la revendication 1 ou 2, **caractérisée en ce que** le système de capteurs (20) comprend un capteur d'accélération (21) et/ou un gyroscope (22).

4. Machine de récolte (100) selon l'une des revendications 1 à 3, **caractérisée en ce que** le système de capteurs (20) comporte un premier capteur d'angle (23) pour déterminer un angle (β1) entre un axe longitudinal (17) de Machine de récolte (100) orienté dans la direction de déplacement (FR) et une horizontale (18) orientée dans la direction de déplacement (FR).

5. Machine de récolte (100) selon l'une des revendications 1 à 4, **caractérisée en ce que** le dispositif de réception de la récolte (10) comprend un tambour (30) qui peut pivoter autour d'un axe de rotation (31) et **en ce qu'**un deuxième capteur d'angle (25) est prévu pour déterminer un angle de déviation (β2) du tambour (30) par rapport à l'axe longitudinal (17) de la Machine de récolte (100) orienté dans le sens de la marche (FR).

6. Machine de récolte (100) selon l'une des revendications 1 à 5, **caractérisée en ce qu'**un timon (32) est prévu pour l'attelage de la machine de récolte (100) au tracteur (200) et que le système de pesage (13) comprend un capteur de pesage (14) intégré dans le timon (32) et qu'un troisième capteur d'angle (26) est prévu pour déterminer un angle (β3) entre un axe longitudinal (33) du capteur de pesage (14) intégré dans le timon (32) et l'horizontale (18) de la machine de récolte (100) orientée dans le sens de la marche (FR).

7. Machine de récolte (100) selon l'une quelconque des revendications 1 à 6, **caractérisée en ce que** la Machine de récolte (100)
- un train de roulement hydraulique (34) ou un train de roulement mécanique
- et un châssis de véhicule (35)
et un capteur (27) est prévu, au moyen duquel une position (P3) du train de roulement hydraulique (34) peut être déterminée par rapport au châssis du véhicule (35).

8. Machine de récolte (100) selon l'une des revendications 1 à 7, **caractérisée en ce qu'**au moins un capteur (28) est prévu pour déterminer au moins une substance contenue dans le produit récolté (12) et **en ce que** le processeur de données (19) est configuré pour effectuer une détermination du poids en fonction de la position, en tenant compte des substances contenues dans le produit récolté (12).

9. Procédé de fonctionnement d'une machine de récolte (100), de préférence d'une remorque chargeuse utilisable pour la récolte de tiges et de feuilles, présentant au moins :
- un dispositif de ramassage de la récolte (10),
- un espace de chargement (11) servant de stockage pour le produit récolté (12),
- un système de pesage (13) pour déterminer une masse (M) de la récolte (12) contenue dans le compartiment de chargement (15),
- un système de détermination de la position (16), par exemple un système GPS ou une interface avec un système de détermination de la position d'un véhicule tracteur (200) tirant la machine de récolte (100),
- un système de capteurs (20) avec au moins un capteur pour déterminer au moins un état de fonctionnement du véhicule,
- un processeur de données (19), qui est configuré pour effectuer une détermination de rendement en fonction de la position,
**caractérisé en ce qu'**une position (P1, P2) du dispositif de ramassage de la récolte (10) est déterminée au moyen du système de capteurs (20) et le processeur de données (19) détermine au moins une valeur de correction sur la base de la position (P1, P2) mesurée par le système de capteurs (20) et transmise au processeur de données (19) et applique cette valeur de correction aux données de poids déterminées par le système de pesage (13), de sorte que l'influence d'une grandeur perturbatrice résultant de la position (P1, P2) du dispositif de ramassage (10) et affectant la mesure du poids est réduite.

10. Procédé pour faire fonctionner une machine de récolte (100) selon la revendication 9, **caractérisé en ce qu'**une valeur de correction statique et/ou dynamique est déterminée comme valeur de correction.

11. Procédé pour faire fonctionner une machine de récolte (100) selon la revendication 10, **caractérisé en ce que**
- le système de capteurs (20) comprend au moins un capteur d'accélération (21) qui détermine une accélération linéaire le long d'un ou de plusieurs axes et/ou
- le système de capteurs (20) comprend au moins un gyroscope (22) pour déterminer un changement de direction et/ou
- le système de capteurs (20) comprend au moins un premier capteur angulaire (23) et/ou un deuxième capteur angulaire (25) et/ou
- le système de capteurs (20) comprend au moins un capteur (28) pour la détermination de la teneur,
- les données déterminées sont transmises au processeur de données (19) et,
- les données saisies par le capteur d'accélération (21) et/ou le gyroscope (22) sont prises en compte lors de la détermination du poids.
